# EUROPEAN PATENT APPLICATION

(11) **EP 4 600 883 A1**
(43) Date of publication of application: **13.08.2025**
(21) Application number: 24305225.5
(22) Date of filing: 09.02.2024
(51) Int. Cl.: G06Q 20/02, G06Q 20/06, G06Q 20/22, G06Q 20/36, G06Q 20/38, G06Q 20/32, G06Q 20/34

(54) **METHOD FOR PERFORMING A CBDC TRANSACTION**

(71) Applicant: THALES DIS FRANCE SAS, 92190 Meudon (FR)
(72) Inventor: OUNG, Richard, 94420 Le Plessis-Trévise (FR); FAVREAU, Valentin, 92130 Issy-les-Moulineaux (FR); CHUA, Jun Ping Bryan, 92100 Boulogne-Billancourt (FR); DUCHER, Valerie, 94200 Ivry-sur-Seine (FR)
(74) Representative: Grevin, Emmanuel

(57) **Abstract**

The invention is a method for performing a CBDC transaction in which a payment instrument (10) hosts a first CBDC wallet (11) and uses optional fields as defined by EMVCo^{®} specifications when responding to commands of an EMV sequence of commands to convey to a terminal (20) a set of CBDC data and the terminal uses optional fields as defined by EMVCo^{®} specifications of commands of said EMV sequence of commands to convey CBDC transaction data to the payment instrument. The terminal sends a CBDC payload (12) to a first entity (30), acting on behalf of an issuer of the payment instrument, which uses the CBDC payload to send to a second entity (40) a message (31) requesting that the transaction amount be transferred between the first CBDC wallet and a second CBDC wallet (41) assigned to a merchant.

## Description

### (Field of the invention)

The present invention relates to methods for performing a Central Bank Digital Currencies (CBDC) transaction. It relates particularly to methods for managing a financial transaction in which the amount is transferred from a CBDC digital wallet to another CBDC digital wallet.

### (Background of the invention)

In the context of an increasing interest of central banks towards Central Bank Digital Currencies, (CBDC), some propositions for CBDC rely on hardware secure devices that could be usable without network connectivity, while other propositions rely on secure devices requiring online-only schemes.

### (Summary of the Invention)

Already proposed CBDC solutions are mainly based on proprietary (i.e. non-standard) methods to carry out a payment transaction with the content of a CBDC wallet. Such proposed CBDC solutions require new hardware and infrastructure to be deployed.

For an easy adoption from payees, merchants, shops and vendors, of CBDC solutions as a payment, CBDC elements could be integrated as a part of a robust and already deployed solution.

There is need to offer a robust solution to players wishing to carry out CBDC transactions.

The invention aims at solving the above-mentioned technical problem.

According to a general principle of the invention, data needed for a CBDC transaction are encapsulated into a conventional EMV transaction flow between the payment instrument and the coupled terminal. Thus, the CBDC solution can be deployed with as few updates as possible on existing terminals and take advantage of the large fleet of payment terminals already deployed in the field.

An object of the present invention is a method for performing a financial transaction for a transaction amount involving a payment instrument and a terminal assigned to a merchant. The terminal sends to the payment instrument a sequence of commands respecting an EMV flow as defined by EMVCo^{®} specifications for conducting said financial transaction. The payment instrument embeds a first Central Bank Digital Currency, CBDC, wallet. The payment instrument uses one or more optional fields as defined by EMVCo^{®} specifications when responding to one or more commands of said sequence to convey to the terminal a request to get CBDC transaction data originated from the terminal, CBDC parameters originated from said first wallet and a CBDC payload indicating the agreement of the first CBDC wallet to transfer the amount between the first CBDC wallet and a second CBDC wallet assigned to the merchant. The terminal uses one or more optional fields as defined by EMVCo^{®} specifications of one or more commands of said sequence to convey said CBDC transaction data to the payment instrument. The terminal forwards the CBDC payload to a first entity, acting on behalf of an issuer of the payment instrument, which uses the CBDC payload to send to a second entity a message requesting that the transaction amount be transferred between the first CBDC wallet and the second CBDC wallet.

Advantageously, the financial transaction may be a payment transaction, the first CBDC wallet may be a payer wallet, the second CBDC wallet may be a payee wallet, and the transaction amount may be credited to the second CBDC wallet.

Advantageously, the financial transaction may be a refund transaction, the first CBDC wallet may be a payee wallet, the second CBDC wallet may be a payer wallet, and the amount may be credited to the first CBDC wallet.

Advantageously, the financial transaction may be a payment transaction, and the payment instrument may make the decision to pay said amount with the first CBDC wallet.

Advantageously, CBDC transaction data originated from the payment instrument or from the terminal may be conveyed through tags related to amount or Cardholder Verification Method result as defined by the EMVCo^{®} Specifications.

Advantageously, the payment instrument may use at least one of the following tags PDOL, CDOL1, CDOL2, DDOL and TDOL as defined by EMVCo^{®} specifications to convey to the terminal both said CBDC parameters originated from said first CBDC wallet and the request to get CBDC transaction data originated from the terminal. The terminal may use an optional field of a Get Processing Options or of a Generate Application Cryptogram command as defined by EMVCo^{®} specifications to convey said CBDC transaction data to the payment instrument in response to said request.

Advantageously, said CBDC transaction data may comprise a certificate retrieved from the first entity, the payment instrument may generate the CBDC payload after having successfully checked said certificate, the terminal may receive from the first entity a new CBDC token along with a signature generated by the first entity, the terminal may send to the payment instrument the new CBDC token through an Issuer script as defined by EMVCo^{®} specifications, and the payment instrument may update the first CBDC wallet using the new CBDC token after having successfully checked said signature.

Advantageously, the payment instrument may generate a payer signature and include the payer signature in the CBDC payload, and the first entity may send the message requesting that the amount be credited to the second CBDC wallet only after a successful checking of the payer signature.

Advantageously, the second entity may be a server acting on behalf of a bank of the merchant and may host the second CBDC wallet.

Advantageously, the second entity may be a hardware device assigned to said merchant and may host the second CBDC wallet.

Another object of the present invention is a payment instrument able to perform a financial transaction for an amount with a terminal assigned to a merchant. The payment instrument is configured to receive from the terminal a sequence of commands respecting an EMV flow as defined by EMVCo^{®} specifications for conducting said financial transaction. The payment instrument embeds a first Central Bank Digital Currency, CBDC, wallet. The payment instrument is configured to use one or more optional fields as defined by EMVCo^{®} specifications when responding to one or more commands of said sequence to convey to the terminal a request to get CBDC transaction data originated from the terminal, CBDC parameters originated from said first wallet and a CBDC payload indicating the agreement of the first CBDC wallet to transfer the amount between the first CBDC wallet and a second CBDC wallet assigned to the merchant. The payment instrument is configured to receive from the terminal said CBDC transaction data conveyed in one or more optional fields as defined by EMVCo^{®} specifications of one or more commands of said sequence.

Advantageously, the payment instrument may be configured to use at least one of the following tags PDOL, CDOL1, CDOL2, DDOL and TDOL as defined by EMVCo^{®} specifications to convey to the terminal both said CBDC parameters originated from said first CBDC wallet and the request to get CBDC transaction data originated from the terminal. The payment instrument may be configured to get said CBDC transaction data from the terminal through an optional field of a Get Processing Options or of a Generate Application Cryptogram command as defined by EMVCo^{®} specifications.

Advantageously, the payment instrument may be a physical smart card, a payment ring, a payment bracelet, a payment watch, or a digital card hosted on a phone.

Another object of the present invention is a system for performing a financial transaction for an amount. The system comprises a payment instrument according to the invention and a terminal assigned to a merchant. The terminal is configured to send to the payment instrument a sequence of commands respecting an EMV flow as defined by EMVCo^{®} specifications for conducting said financial transaction. The system comprises a first entity acting on behalf of an issuer of the payment instrument and a second entity. The first entity is configured to use the CBDC payload to send to the second entity a message requesting that the amount be transferred between the first CBDC wallet and the second CBDC wallet.

Advantageously, the payment instrument may be configured to use at least one of the following tags PDOL, CDOL1, CDOL2, DDOL and TDOL as defined by EMVCo^{®} specifications to convey to the terminal both said CBDC parameters originated from said first CBDC wallet and the request to get CBDC transaction data originated from the terminal. The terminal may be configured to use an optional field of a Get Processing Options or of a Generate Application Cryptogram command as defined by EMVCo^{®} specifications to convey said CBDC transaction data to the payment instrument in response to said request.

Advantageously, the second entity may be the first entity.

### (Brief description of the drawings)

Other characteristics and advantages of the present invention will emerge more clearly from a reading of the following description of a number of preferred embodiments of the invention with reference to the corresponding accompanying drawings in which:
Fig. 1 shows the first part of a first exemplary flow diagram for managing an online payment with a CBDC wallet according to an example of the invention,
Fig. 2 shows the second part of the first exemplary flow diagram for managing an online payment with a CBDC wallet according to an example of the invention,
Fig. 3 shows the first part of a second exemplary flow diagram for managing an offline payment with a CBDC wallet according to an example of the invention,
Fig. 4 shows the second part of the second exemplary flow diagram for managing an offline payment with a CBDC wallet according to an example of the invention; and
Fig. 5 shows a diagram of architecture of a system for managing financial transactions with a CBDC wallet according to an example of the invention.

### (Detailed description of the preferred embodiments)

The invention may apply to CBDC wallets hosted in many kinds of hardware payment instrument. The invention is well suited for CBDC wallets embedded in smart cards. It can also apply to CBDC wallets hosted in physical secure devices with different form factors such as smartphones and wearable devices like, rings, key fobs or bracelets for example.

Smart cards are portable small devices comprising a memory, a processor, and an operating system for computing treatments. They may comprise services applications like Payment, Access or Telecom applications. Such smart cards may comprise a plurality of memories of different types, like non-volatile memory and volatile memory. They are considered as tamper-resistant (or "secure") because they are able to control the access to the data they contain and to authorize or not the use of data by other machines. A smartcard may also provide computation services based on cryptographic components. In general, smartcards have limited computing resources and limited memory resources and they are intended to connect a host machine that provides them with electric power either in contact mode or in contactless mode. Some smart cards have their own embedded energy source.

Contact smart cards are usually designed to communicate according to at least one contact protocol like ISO/IEC7816 T=0 or T=1 communication protocols. Contactless smart cards are designed to communicate according to at least one contactless protocol like a protocol defined by ISO/IEC 14443 standard.

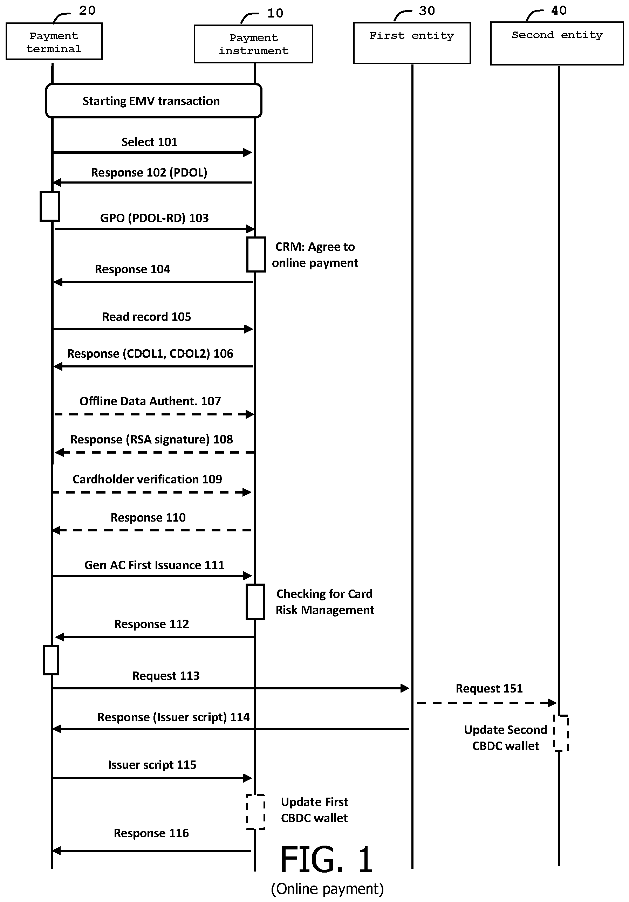

Figure 1 depicts an exemplary flow diagram corresponding to the first part of an exemplary flow managing an online payment with a CBDC wallet according to an example of the invention.

In this example, a customer must pay a merchant for a product or service. The customer is physically present in front of the store's payment terminal. This payment terminal can be a Point-Of-Sale (POS) terminal embedding a display, a keyboard and a smartcard reader.

The customer has a payment instrument which host a digital CBDC wallet whose balance is supposed to be sufficient for the payment to be made.

The payment instrument can be a smart card hosting a CBDC wallet or a payment card hosting both a conventional payment application and a CBDC wallet. In the latter case, the payment card may embed a button allowing the cardholder to select either to use CBDC payment or a conventional banking account for the financial transaction.

In some embodiments, the payment card may be previously personalized to automatically select the CBDC mechanism when the amount of the financial transaction is smaller than the current balance of the CBDC wallet.

In some embodiments, the payment card may be previously personalized to automatically select the CBDC mechanism when the amount is smaller (or bigger) than a predefined threshold.

In some embodiments, the payment card may be previously personalized to select the CBDC mechanism depending on one or more parameters intrinsic to the financial transaction like type of merchant/store, type of service/product, currency, date, or place of the store.

The merchant has their own CBDC digital wallet which can be hosted in variety of hardware appliances. For example, the merchant's CBDC digital wallet can be hosted in a remote server of the merchant's bank, in a payment terminal installed in the store or in a portable apparatus belonging to the merchant like a phone or a table PC computer.

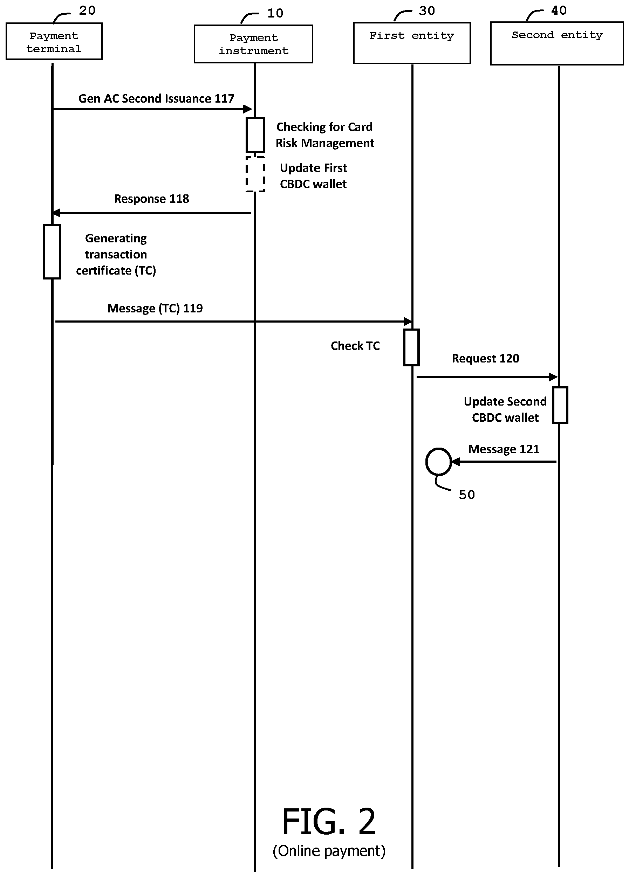

In order to clarify the rest of the presentation of the financial transaction depicted at Fig. 1 & 2, the customer's CBDC wallet will be called first CBDC wallet and the merchant's CBDC wallet will be called second CBDC wallet.

Both first and second CBDC wallets belong to the same CBDC model. In other words, they contain money amount expressed in the same digital currency that has been issued by the same Digital Currency provider (DCP).

As will be detailed later, the payment terminal sends to the payment instrument a sequence of commands respecting an EMV flow as defined by EMVCo^{®} specifications for conducting the financial transaction.

The payment instrument uses one or more optional fields as defined by EMVCo^{®} specifications when responding to one or more commands of the sequence of commands to convey to the terminal a request to get CBDC transaction data originated from the terminal, CBDC parameters originated from the first wallet and a CBDC payload indicating the agreement of the first CBDC wallet to transfer the amount between the first CBDC wallet and a second CBDC wallet which is assigned to the merchant.

The terminal uses one or more optional fields as defined by EMVCo^{®} specifications of one or more commands of said sequence of commands to convey said CBDC transaction data to the payment instrument.

The terminal forwards the CBDC payload (received from the first CBDC wallet) to a first entity that acts on behalf of the issuer of the payment instrument. In turn, the first entity uses the received CBDC payload to send to a second entity a message requesting that the second CBDC wallet be updated to reflect the transfer of the transaction amount between the first CBDC wallet and the second CBDC wallet.

In some embodiments, the first entity can be a hardware server allocated to the bank that issued the payment instrument. In some embodiments, the first entity can be a hardware server assigned to a central bank or a Digital Currency Provider (DCP).

In some embodiments, the second entity can be a hardware server allocated to the merchant's bank. In some embodiments, the second entity can be a hardware server assigned to a central bank or a Digital Currency Provider (DCP) .

The first entity comprises a CBDC engine designed to determine the second CBDC wallet by analyzing the CBDC transaction data and payload received from a payment terminal. Thus, the first entity can identify the second entity to which it should send a message to request credit of the merchant's CBDC wallet.

In some embodiments, the hardware server allocated to the merchant's bank can host the second CBDC wallet.

In some embodiments, a hardware device assigned to the merchant can host the second CBDC wallet. For instance, the second CBDC wallet can be stored in a phone of the merchant, or a POS terminal assigned to the merchant.

In some embodiments, the financial transaction can be a payment transaction. Thus, the first CBDC wallet can be a payer wallet, the second CBDC wallet can be a payee wallet, and the transaction amount is credited to the second CBDC wallet.

In some embodiments, the financial transaction can be a refund transaction. Thus, the first CBDC wallet can be a payee wallet, the second CBDC wallet can be a payer wallet, and the transaction amount can be credited to the first CBDC wallet.

In some embodiments, the payment instrument can use one or more of the following tags PDOL, CDOL1, CDOL2, DDOL and TDOL as defined by EMVCo^{®} specifications to send data request to the payment terminal coupled to the payment instrument. In particular, the payment instrument can use one or more of the listed tags to convey CBDC parameters originated from the first CBDC wallet and a request to get CBDC transaction data originated from the terminal.

In some embodiments, the payment terminal can use an optional field of a Get Processing Options (GPO) command and/or of a Generate Application Cryptogram (GenAC) command as defined by EMVCo^{®} specifications to convey CBDC transaction data to the payment instrument.

In some embodiments, the payment instrument can make the decision to pay the transaction amount with the first CBDC wallet instead of a banking account. The payment instrument can take into account either only parameter(s) prestored in its own non-volatile memory or a combination of its internal settings and a profile data received from the payment terminal, said profile data reflecting either the CBDC capacity of the payment terminal or the agreement of the payment terminal to select the CBDC mechanism.

For example, the payment instrument may send a response (e.g. Response 102 of Fig. 1) comprising a PDOL tag containing a specific value asking if the CBDC mechanism is supported by the terminal. In turn, the payment terminal may send a GPO command comprising a PDOL-RD containing a data reflecting the fact that the CBDC mechanism is supported or not by the terminal. For instance, a PDOL-RD containing zero data may mean that the terminal does not support the CBDC mechanism. Then depending on the content of the PDOL-RD, the payment instrument may pursue the financial transaction using the CBDC wallet, pursue the financial transaction using a conventional banking account or reject the financial transaction.

As shown at Fig.1, the financial transaction can start as a conventional EMV transaction between the payment terminal 20 and the payment instrument 10 (i.e. payment card).

Then the terminal 20 can send a Select command 101 to the payment card 10. In response to the Select command 101, the card may generate and send a Response 102 comprising data specific to the CBDC process.

The payment card can embed one or more payments applications which can be identified by an Application Identifier (AID) on 5-16 bytes. Select command identifies which application to run on the payment card. The payment terminal can be configured to select an application from a predefined set of AIDs and an ordered list of AIDs provided by the card.

The payment card can be previously (or dynamically) customized to set an application supporting the CBDC model with the highest priority in the ordered list of AIDs.

The Response 102 can comprise a PDOL tag and other data fields compliant with the EMVCo^{®} specifications. For example, the PDOL tag may contain a request for specific CBDC transaction data originated from the terminal and one of the other data fields can contain the current balance of the first CBDC wallet (stored in the card) and additional parameters like Card Risk Management settings or wallet limits.

Upon receipt of the Response 102, the terminal prepares and sends to the card 10 a Get Processing Options (GPO) command 103 comprising PDOL-RD (PDOL-Related Data) which contains the specific CBDC transaction data requested by the card through the PDOL tag of the response 102.

The CBDC transaction data sent by the terminal can contain one or more of the following items: CBDC scheme and version support, CBDC Operation Type, CBDC Operation amount, Terminal capabilities (like online compatibility), CBDC Operation destination, Merchant certificate, Merchant payment request, Merchant challenge, DCP certificate, DCP online transaction request, DCP challenge and CBDC Tokens.

Upon receipt of the GPO command 103, the card carries out operations related to the EMV and/or CBDC Card Risk Management. In the flow depicted at Figure 1, the card agrees to go for an online payment. Consequently, the card sends to the terminal a response 104 reflecting the choice of online payment.

The response 104 can contain an Application Interchange Profile (AIP) and an Application File Locator (AFL) compliant with EMVCo^{®} specifications.

AIP gives the terminal information on how to interact with the application concerning (not only) how to authenticate the card, how to verify cardholder.

AFL gives the terminal a list of records to read. Each record is a sequence of data field (TLV formatted) among which are CDOL1, CDOL2, DDOL, TDOL. Among those record will be added CBDC data coming from the payment instrument (Card certificate, Card challenge).

It should be noted that when selecting online payment, the card requires to get some data from a remote server associated to the bank which issued the card in the pending transaction. The card uses the data originated from the remote server to make a decision to accept or not the transaction.

Upon receipt of the Response 104, the terminal prepares and sends to the card 10 one or more Read Record commands 105.

In response to each Read Record command 105, the card may generate and send a Response 106 comprising one record containing one or more tags. For instance, the record(s) may contain a CBDC card certificate and a card challenge. The CDOL1 tag may contain a request to get a DCP certificate and a DCP challenge from the terminal. The CDOL2 tag may contain a request to get a new Digital token signed by the DCP from the terminal.

After receipt of the Response 106, the terminal can prepare and send to the card 10 a first Generate Application Cryptogram (also called GenAC1 or GenAC first issuance) command 111 comprising CDOL1-RD (CDOL1-Related Data) which contains the DCP certificate and DCP challenge.

The DCP certificate may have been prefetched or loaded from the first entity 30 or retrieved on the fly from the first entity 30 by the terminal 20.

The DCP challenge may have been prefetched from the first entity 30 by the terminal 20 or generated by the terminal 20.

It should be noted that the content of the CDOL1-RD corresponds to the data requested by the CDOL1 tag comprises in the Response 106.

Upon receipt of the GenAC1 command 111, the card carries out operations related to a EMV and/or CBDC Card Risk Management (CRM). Preferably, the card does perform the usual EMV CRM processing and may perform CBDC CRM processing if needed.

In particular, the card may check the validity of the received DCP certificate (and denies the financial transaction in case of invalid DCP certificate). If the DCP certificate is valid, the card may generate a renewal token group reflecting the history of the first CBDC wallet and lock the first wallet in renewal mode. The history of the first CBDC wallet can be a set of data describing CBDC transfers made in previous transactions. The renewal mode can be designed to replace history data by a refreshed data corresponding to the new balance of the CBDC wallet.

Then the card may prepare and send to the terminal a response (Response 112) to the GenAC1 command 111 containing a EMV Application Cryptogram (generated by the card) and both the renewal token group and a signature generated by the card. The renewal token group and a signature generated by the card may be placed in an unused data tag compliant with the EMVCo^{®} specifications.

Upon receipt of the Response 112, the terminal can connect to the first entity 30 and send it a request 113 containing a bulk of data comprising elements originated from both the terminal and the card. The bulk of data may comprise a combination of the following elements: the DCP challenge, the card certificate, the renewal token group, a card signature, and a card challenge.

The first entity 30 can be a hardware server handling financial information for the issuer bank. The first entity 30 comprises a CBDC engine configured to act as a Digital Currency Provider (DCP) or one of its intermediaries.

The CBDC engine checks the received bulk of data and in case of successful checking generate a new refreshed data intended to update the first CBDC wallet. The CBDC engine can compute a DCP signature of the new refreshed data.

Then the first entity 30 sends to the terminal 20 the new refreshed data and the computed DCP signature.

Preferably, the first entity 30 can puts the new refreshed data and the computed DCP signature in one or more Issuer scripts (compliant with EMVCo^{®} specifications) that the payment terminal must subsequently send to the card. The first entity 30 sends the Issuer script(s) in a response 114.

In some embodiments, the first entity 30 can exchange additional messages (not shown at Figures 1) with the second entity 40 to retrieve the refreshed data, the computed DCP signature or other CBDC data originated from the second CBDC wallet.

Upon receipt of the Response 114, the terminal can extract the Issuer script(s) from the Response 114 and send the Issuer script(s) to the card through a message 115.

Then the card may process the received Issuer script (s) and send back a Response 116 to acknowledge receipt of the message 115. The message 115 can contain the refreshed data and the computed DCP signature originated from the first entity 30. The card may check the validity of the received DCP signature and denies the financial transaction in case of invalid DCP signature. If the DCP signature is valid, the card may update the first CBDC wallet using the received refreshed data.

The Response 116 can contain an acknowledgement of the update of the first CBDC wallet by the card. This acknowledgement may be placed in an unused data tag compliant with the EMVCo^{®} specifications.

The rest of the data exchanges for the current transaction appear in Figure 2. After receipt of the Response 116, the terminal can prepare and send to the card 10 a second Generate Application Cryptogram (also called GenAC2 or Gen AC second issuance) command 117.

Upon receipt of the GenAC2 command 117, the card carries out operations related to a EMV and/or CBDC Card Risk Management.

If not already done when processing the Issuer script (s), the card may check the validity of the received DCP signature and denies the financial transaction in case of invalid DCP signature. If the DCP signature is valid, the card may update the first CBDC wallet using the received refreshed data.

Then the card may prepare and send to the terminal a response (Response 118) to the GenAC2 command 117 containing a second EMV Application Cryptogram (generated by the card). If the card updated the first CBDC wallet, the Response 118 can contain an acknowledgement of the update of the first CBDC wallet by the card. This acknowledgement may be placed in an unused data tag compliant with the EMVCo^{®} specifications.

Upon receipt of the Response 118, the terminal can generate a transaction certificate (TC) and send it to the first entity 30 through a message 119.

In turn, the first entity 30 interprets the content of the message 119 as an agreement to finalize the pending financial transaction and, thus, sends a request 120 to a second entity 40. In some embodiment, the first entity 30 can check the validity of the received transaction certificate and stop the financial transaction in case or wrong transaction certificate.

The request 120 can contain an explicit or implicit agreement to transfer the transaction amount between first and second CBDC wallets.

In some embodiments, the first entity 30 can be designed to retrieve the identity of the second entity from CBDC data received from the payment terminal.

In some embodiments, the first entity 30 can be designed to query a database to retrieve the identity of the second entity based on an identifier of the payment terminal or an identifier of the merchant for instance.

In some embodiments, the request 120 sent from the first entity 30 to the second entity can contain a new CBDC token intended to be used for updating the second CBDC wallet and a CBDC signature allowing the second entity to check the validity of the CBDC token.

The second entity 40 can be a hardware server handling financial information for the merchant's bank. The second entity 40 can host the second CBDC wallet or a CBDC monitoring unit configured to control the second CBDC wallet when it is hosted in another machine.

Upon receipt of the request 120, the second entity 40 can update the second CBDC wallet using the data extracted from the content of the request 120.

In some embodiments, the second CBDC wallet can be stored in a hardware appliance distinct from the second entity 40. In such cases, the second entity 40 can send a request to update the second CBDC wallet (with the relevant transaction amount) to the hardware appliance hosting the second CBDC wallet. To this end, the hardware appliance is assumed to have been registered with the second entity 40 during a prior phase.

Once the second CBDC wallet has been updated, the second entity 40 can send a message 121 to a device 50 of the merchants indicating the successful completion of the financial transaction via the CBDC mechanism. The device 50 can be a portable apparatus like a smartphone or the POS terminal of the merchants if it is equipped with appropriate feature to provide the feedback to the merchant. To this end, the device 50 is assumed to have been declared with the second entity 40 during a prior phase.

It can be noted that the conventional EMV flow encompasses the above presented commands, responses and messages from 101 to 119.

In some embodiments, upon receipt of the request 113, and after successful checking, the first entity 30 can send a request 151 to the second entity 40 to trigger the update of the second CBDC wallet before the update of the first CBDC wallet (as shown at Fig. 1). The request 151 can contain an explicit agreement to transfer the transaction amount between first and second CBDC wallets. In case of refund transaction, the Request 151 can contain CBDC items reflecting a request to debit the second CBDC wallet.

In some embodiments, an additional security sequence (as defined by EMVCo^{®} specifications) can be executed to authenticate the card and/or verify the user (i.e. cardholder) before the sending of the first GenAC command (as shown at Fig. 1). For example, upon receipt of the Response 106, the terminal may send an Offline Data authentication command 107 to the card. In response, the card may send a Response 108 comprising an RSA signature computed by the card.

Upon receipt of the Response 108, the terminal may check the validity of the signature extracted from the Response 108 and send to the card a Cardholder verification command 109 to the card. In response, the card may send a Response 110 comprising a result of the verification of the cardholder. Such a verification can be based on a PIN code typed by the card user or a fingerprint captured from the card user for instance.

If both the card and the cardholder are successfully authenticated, the terminal may continue the financial transaction by preparing and sending the First Generate Application Cryptogram command 111 as described above.

It should be noted that the payment terminal can carry out the card authentication at another time. For instance, the payment terminal may attempt to authenticate the card authentication at the time of the processing of the Generate AC command 111. In addition, card authentication and user verification are two distinct operations that can be processed separately by the terminal.

The embodiments presented above use the pairs of tag CDOL1/CDOL1-RD and CDOL2/CDOL2-RD and the other data fields (as defined by EMVCo^{®} Specifications) to convey CBDC data between the terminal and the card. The invention is not limited to these manners to convey CBDC data. Notably, other combinations of tags (as defined by EMVCo Specifications) can be used to convey CBDC data between the terminal and the card.

In some embodiments, some CBDC data can be conveyed through other tags already defined by the EMVCo^{®} Specifications for specific usage (s). For example, the CBDC transaction amount can be send through the tag 9F02h (Amount Authorized), the tag 9F03h (Amount, Other) or the tag 9F3Ah (Amount, Reference currency). In the same way, the tag 9F34h (Cardholder Verification Method Results) could be used in the exchanges related to the CBDC transaction risk management

The embodiments presented above show some kinds of CBDC data exchanged between the terminal and the card. Depending on the CBDC model to which the two CBDC wallets belong, other kinds of CBDC data may be exchanged between the payment terminal and the payment instrument.

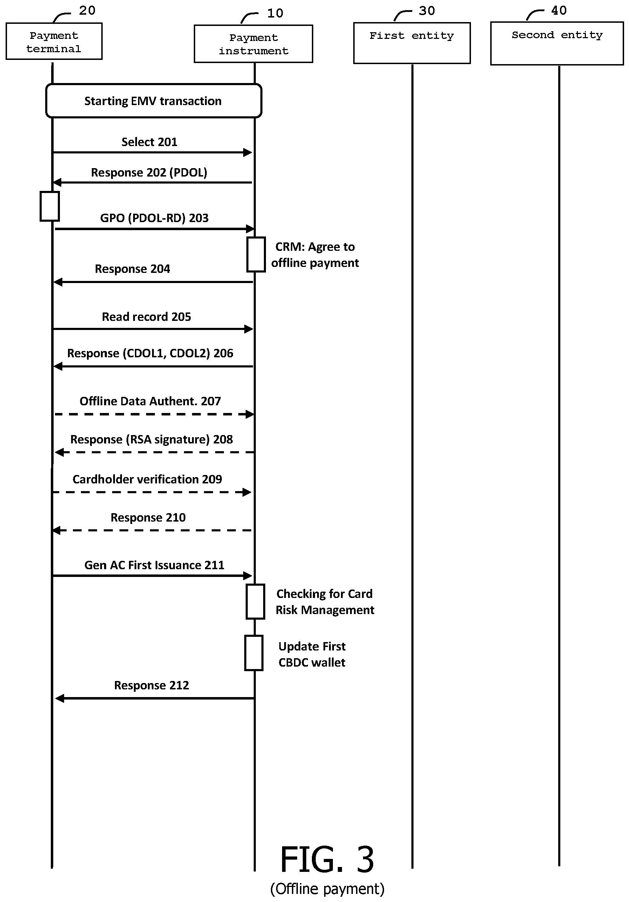

Figure 3 depicts an exemplary flow diagram corresponding to the first part of an exemplary flow managing an offline payment with a CBDC wallet according to an example of the invention.

Similarly to the example of Figure 1, a customer must pay a merchant for a product or service. The customer is physically present in front of the store's payment terminal. This payment terminal can be a Point-Of-Sale (POS) terminal embedding a display, a keyboard and a smartcard reader.

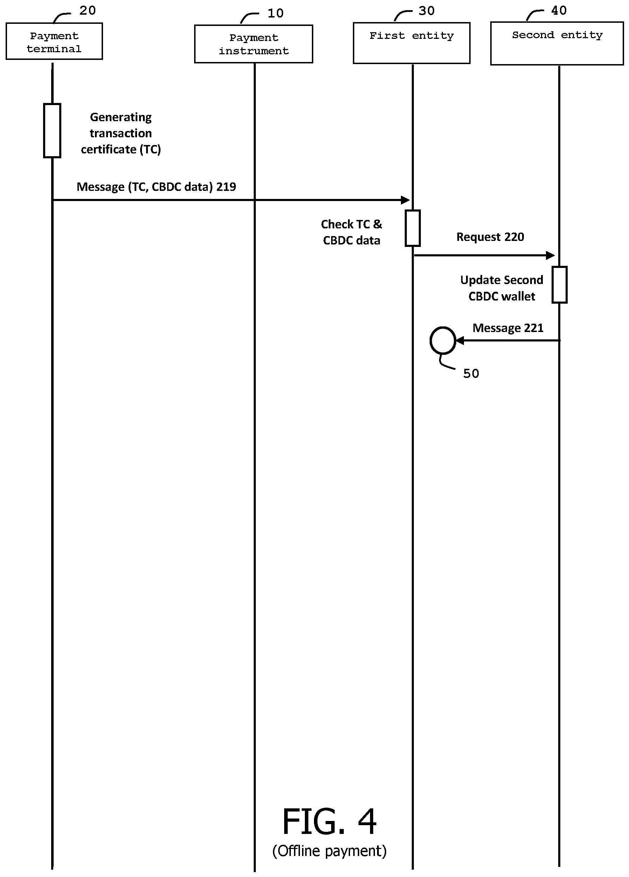

The data exchange flow illustrated in Figure 3 and 4 is partly similar to the one presented at Figures 1 & 2.

The payment terminal 20 and the card can exchange a pair "Select command 201/ Response 202" similar to the pair "Select command 101/ Response 102" of Figure 1 then a pair "Get Processing Options command 203/ Response 204" similar to the pair "GPO command 103/ Response 104" of Figure 1.

Upon receipt of the GPO command 203, the card carries out operations related to the EMV and/or CBDC Card Risk Management. In the flow depicted at Figure 3, the card agrees to go for an offline payment. Consequently, the card sends to the terminal a response 204 reflecting the choice of offline payment.

It should be noted that when selecting offline payment, the card makes a decision to accept or not the current transaction without requiring to get some data from a remote server associated to the bank which issued the card.

Upon receipt of the Response 204, the terminal prepares and sends to the card 10 one or more Read Record commands 205.

In response to each Read Record command 205, the card may generate and send a Response 206 comprising records with one or more tags. For instance, the record(s) may contain a CBDC card certificate and a card challenge. The CDOL1 tag may contain a request to get a payee CBDC certificate, a payee CBDC challenge and/or a payee CBDC signature from the terminal.

It should be noted that the terminal may ignore a CDOL2 tag received from the payment instrument if there is no need for the second issuance of the Generate AC command.

After receipt of the Response 206, the terminal can prepare and send to the card 10 a Generate Application Cryptogram (also called GenAC1 or GenAC first issuance) command 211 comprising CDOL1-RD which contains the data requested by the CDOL1 tag: a payee CBDC certificate, a payee CBDC challenge and/or a payee CBDC signature.

Upon receipt of the GenAC1 command 211, the card carries out operations related to a CBDC and/or EMV Card Risk Management.

In particular, the card may check the validity of the received payee CBDC signature (and denies the financial transaction in case of invalidity). If the payee CBDC signature is valid, the card may update the first CBDC wallet and generate a card signature reflecting the correct completion of the first CBDC wallet update.

The payee CBDC certificate (also called merchant certificate) can be used to attest to the existence and validity of the merchant CBDC wallet. Control of the payee CBDC certificate is optional.

The payee CBDC signature (also called merchant signature) is also optional. It can be used to prove the payment terminal is in possession of the private key linked to the Merchant CBDC wallet for instance.

The payee CBDC challenge (also called merchant challenge) might be optional. It could be computed from transaction data.

Then the card may prepare and send to the terminal a response (Response 212) to the GenAC1 command 211 containing a EMV Application Cryptogram (generated by the card) and both the signature generated by the card and a CBDC token reflecting the new balance of the first CBDC wallet or the debit of the transaction amount. The signature generated by the card and the CBDC token may be conveyed in unused data tag (compliant with the EMVCo^{®} specifications) of the Response 212.

The rest of the data exchanges for the current transaction in offline mode appear in Figure 4.

Upon receipt of the Response 212, the terminal can generate a transaction certificate (TC) and send it to the first entity 30 through a message 219. The message 219 also contains CBDC data requesting to update the second CBDC wallet. The CBDC data include the CBDC token received from the card.

In turn, the first entity 30 interprets the content of the message 219 as a request to finalize the pending financial transaction. The first entity 30 can check the received CBDC data and send a corresponding request 220 to a second entity 40.

The request 220 can contain the CBDC data and aims at requesting to credit the transaction amount to the second CBDC wallet.

Upon receipt of the request 220, the second entity 40 can update the second CBDC wallet using the CBDC data or forward a request to update the second CBDC wallet to an appliance hosting the second CBD wallet.

Once the second CBDC wallet has been updated, the second entity 40 can send a message 221 to a device 50 associated with the merchant indicating the successful completion of the financial transaction via the CBDC mechanism.

In some embodiments, an additional security sequence (as defined by EMVCo^{®} specifications) can be performed to authenticate both the card and the card user (i.e. cardholder) before the sending of the first GenAC command (as shown at Fig. 3). For example, upon receipt of the Response 206, the terminal and the card may exchange a sequence comprising an Offline Data authentication command 207, a corresponding Response 208, a Cardholder verification command 209 and a Response 210. These commands and responses are similar to the commands 107 & 109 and responses 108 & 110 described at Figure 1.

If both the card and the cardholder are successfully authenticated, the terminal may continue the financial transaction by preparing and sending the First Generate Application Cryptogram command 211 as described above.

It can be noted that the conventional EMV flow encompasses the above presented commands, responses and messages from 201 to 219.

Preferably, the financial transaction can be conducted with a zero amount from the conventional EMV transaction point of view while the real transaction amount is transferred from a CBDC wallet to another one.

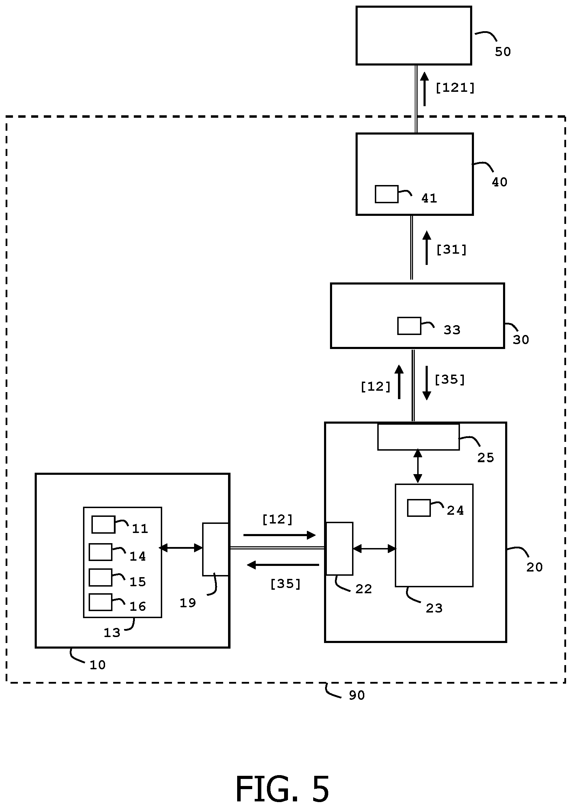

Figure 5 depicts a diagram of architecture of a system 90 for managing financial transactions with a CBDC wallet according to an example of the invention.

The system 90 comprises a payment instrument 10, a terminal 20 assigned to a merchant, a first entity 30, and a second entity 40.

In this example, the payment instrument 10 can be a payment card embedding a secure element 13 comprising a hardware processing unit, a memory storing an operating system 15, a CBDC wallet 11, a banking application 14 designed to contribute to EMV payment services and a CBDC application 16 designed to contribute to CBDC transactions. The payment instrument 10 has a communication interface 19 configured to communicate through a contact or contactless communication protocol with a card reader. Preferably, the payment instrument 10 is a proximity card able to communicate through a contactless protocol as defined by the ISO 14443 standard.

The CBDC wallet 11 contains a digital representation of a balance of digital currency hold by an (possibly anonymous) account. It could contain one or more CBDC tokens. The CBDC application 16 is an application managing the CBDC wallet 11 and designed to handle transfer of digital currency from and to it.

This CBDC application is designed to use one or more optional fields as defined by EMVCo^{®} specifications when responding to one or more commands of an EMV sequence to convey to the terminal 20 a request to get CBDC transaction data originated from the terminal, CBDC parameters originated from the first wallet 11 and a CBDC payload 12 indicating the agreement of the CBDC wallet 11 to transfer the transaction amount between the CBDC wallet 11 and another CBDC wallet 41 assigned to the merchant. The CBDC application is designed is configured to receive from the terminal the CBDC transaction data conveyed in one or more optional fields as defined by EMVCo^{®} specifications of one or more commands of an EMV said sequence.

The terminal 20 is a payment terminal comprising a reader 22 configured to communicate through a contact or contactless communication protocol with the payment instrument 10. The terminal 20 comprises a banking application 23 designed to send to the payment instrument a sequence of commands respecting an EMV flow as defined by EMVCo^{®} specifications for conducting a financial transaction. The banking application 23 can comprise predefined one or more CBDC parameters 24 that are used by the banking application 23 to participate to a CBDC transaction between two CBDC wallets.

The terminal 20 comprises a communication interface 25 configured to communicate with the first entity 30 through a communication channel. The communication channel may rely on the Internet or a combination of public and/or private networks.

The first entity 30 is designed to act on behalf of the issuer of the payment instrument. The first entity 30 can be a hardware server or a computer machine comprising a hardware processor and program instructions configured to participate to a financial transaction using an EMV flow as defined by EMVCo^{®} specifications. The first entity 30 is configured to use a CBDC payload 12 (received from the terminal 20) to send to the second entity 40 a message 31 requesting that the transaction amount be transferred between the first CBDC wallet 11 and the second CBDC wallet 41.

The first entity 30 may contain a CBDC engine 33 acting on behalf of the DCP. This CBDC engine 33 can comprise a central transaction collector (CTC) which is in charge of collecting history of CBDC offline transactions carried out between CBDC wallets. Although payments instruments of the invention may handle offline CBDC transactions, they are supposed to periodically connect the CTC and upload their CBDC transaction logs, for instance when they have reached a ceiling on their capacity.

The CBDC engine 33 is designed to verify he validity of CBDC data originated from the payment instrument, to prepare and send (via the terminal 20) to the payment instrument CBDC items 35 needed to update the CBDC wallet 11 hosted in the payment instrument and to prepare and send to the second entity 40 a CBDC message 31 needed to update the CBDC wallet 41 hosted in the second entity 40.

The CBDC engine 33 can be designed to generate a refreshed data corresponding to the new balance of a CBDC wallet and intended to replace history data in the CBDC wallet. The CBDC engine 33 can be implemented as a set of program instructions executed by the hardware processor of the first entity 30.

The second entity 40 stores a CBDC wallet 41 assigned to the merchant. The second entity 40 can be a hardware server or a portable appliance.

In the example of Figure 5, the second entity 40 is a hardware server acting on behalf of the bank of the merchant. The hardware server 40 can include a hardware processor and program instructions configured provided the appropriate CBDC services.

In some embodiments, the first entity 30 can be the second entity 40.

In some embodiments, the second entity 40 can be configured to send an acknowledgement message 121 to a portable appliance 50 allocated to the merchant, like a phone or a tablet PC. The portable appliance can have been previously registered in the second entity 40. For instance, the second entity 40 can be configured to send the acknowledgement message via a Telecom network to the portable appliance 50 to inform the merchant of the successful completion of the financial transaction.

In some embodiments, the second entity 40 can be configured to send the acknowledgement message to the terminal 20. Preferably, the terminal 20 is a payment terminal equipped with appropriate feature to provide the feedback to the merchant.

The payment instrument can be implemented in different form factors: a physical smart card, a payment ring, a payment bracelet, a payment watch or a digital card hosted on a phone for instance.

In some embodiments, the payment instrument may comprise more than one CBDC wallet. The user may select the CBDC wallet to use for a financial transaction by using a man machine interface like a button. The user may have predefined an order of priority between the different CBDC wallets or set specific criteria (like ta range of amounts, a currency, a place, a type or merchant or a date) to automatically select one of the CBDC wallets.

Thanks to some embodiments of the invention, the CBDC solution can be deployed without replacing the hardware elements already deployed in the field. The update of software components in the existing machines allows to take advantage of the existing fleet of payment terminals and infrastructure.

Thanks to some embodiments of the invention, the user of the payment instrument can pre-personalize their payment instrument to apply either a conventional EMV payment or a CBDC payment depending on criteria they selected.

Thanks to some embodiments of the invention, the payment instrument can select to go online or remain offline depending on the internal status of its CBDC wallet and/or on security rules that could be taken into account by risk management controls.

The invention is not limited to the described embodiments or examples. In particular, the described features of the presented embodiments may be combined as can be understood by those skilled in the art.

## Claims

1. A method for performing a financial transaction for an amount involving a payment instrument (10) and a terminal (20) assigned to a merchant, said terminal sending to the payment instrument a sequence of commands respecting an EMV flow as defined by EMVCo^{®} specifications for conducting said financial transaction,
wherein the payment instrument embeds a first Central Bank Digital Currency, CBDC, wallet (11),
wherein the payment instrument uses one or more optional fields as defined by EMVCo^{®} specifications when responding to one or more commands of said sequence to convey to the terminal (20) a request to get CBDC transaction data originated from the terminal, CBDC parameters originated from said first wallet (11) and a CBDC payload (12) indicating the agreement of the first CBDC wallet to transfer the amount between the first CBDC wallet and a second CBDC wallet (41) assigned to the merchant,
wherein the terminal uses one or more optional fields as defined by EMVCo^{®} specifications of one or more commands of said sequence to convey said CBDC transaction data to the payment instrument,
wherein the terminal forwards the CBDC payload (12) to a first entity (30), acting on behalf of an issuer of the payment instrument, which uses the CBDC payload to send to a second entity (40) a message (31) requesting that the amount be transferred between the first CBDC wallet and the second CBDC wallet (41).

2. The method according to claim 1, wherein the financial transaction is a payment transaction, the first CBDC wallet is a payer wallet, the second CBDC wallet is a payee wallet, and the amount is credited to the second CBDC wallet, or wherein the financial transaction is a refund transaction, the first CBDC wallet is a payee wallet, the second CBDC wallet is a payer wallet, and the amount is credited to the first CBDC wallet.

3. The method according to claim 2, wherein the financial transaction is a payment transaction, and the payment instrument makes the decision to pay said amount with the first CBDC wallet (11).

4. The method according to claim 1, wherein CBDC transaction data originated from the payment instrument or the terminal are conveyed through tags related to amount or Cardholder Verification Method result as defined by the EMVCo^{®} Specifications.

5. The method according to claim 1, wherein the payment instrument uses at least one of the following tags PDOL, CDOL1, CDOL2, DDOL and TDOL as defined by EMVCo^{®} specifications to convey to the terminal (20) both said CBDC parameters originated from said first CBDC wallet (11) and the request to get CBDC transaction data originated from the terminal, and
wherein the terminal uses an optional field of a Get Processing Options or of a Generate Application Cryptogram command as defined by EMVCo^{®} specifications to convey said CBDC transaction data to the payment instrument in response to said request.

6. The method according to claim 1, wherein said CBDC transaction data comprises a certificate retrieved from the first entity (30),
wherein the payment instrument generates the CBDC payload (12) after having successfully checked said certificate,
wherein the terminal receives from the first entity a new CBDC token along with a signature generated by the first entity,
wherein the terminal sends to the payment instrument the new CBDC token through an Issuer script as defined by EMVCo^{®} specifications, and
wherein the payment instrument updates the first CBDC wallet (11) using the new CBDC token after having successfully checked said signature.

7. The method according to claim 1, wherein the payment instrument generates a payer signature and includes the payer signature in the CBDC payload (12), and
wherein the first entity (30) sends the message (31) requesting that the amount be credited to the second CBDC wallet only after a successful checking of the payer signature.

8. The method according to claim 1, wherein the second entity (40) is a server acting on behalf of a bank of the merchant and hosts the second CBDC wallet (41).

9. The method according to claim 1, wherein the second entity is a hardware device assigned to said merchant and hosts the second CBDC wallet.

10. A payment instrument (10) able to perform a financial transaction for an amount with a terminal (20) assigned to a merchant, said terminal sending a sequence of commands respecting an EMV flow as defined by EMVCo^{®} specifications for conducting said financial transaction,
wherein the payment instrument embeds a first Central Bank Digital Currency, CBDC, wallet (11),
wherein the payment instrument is configured to use one or more optional fields as defined by EMVCo^{®} specifications when responding to one or more commands of said sequence to convey to the terminal a request to get CBDC transaction data originated from the terminal, CBDC parameters originated from said first wallet (11) and a CBDC payload (12) indicating the agreement of the first CBDC wallet to transfer the amount between the first CBDC wallet and a second CBDC wallet (41) assigned to the merchant,
wherein the payment instrument is configured to receive from the terminal said CBDC transaction data conveyed in one or more optional fields as defined by EMVCo^{®} specifications of one or more commands of said sequence.

11. The payment instrument to claim 10, wherein the payment instrument is configured to use at least one of the following tags PDOL, CDOL1, CDOL2, DDOL and TDOL as defined by EMVCo^{®} specifications to convey to the terminal (20) both said CBDC parameters originated from said first CBDC wallet (11) and the request to get CBDC transaction data originated from the terminal, and
wherein the payment instrument is configured to get said CBDC transaction data from the terminal through an optional field of a Get Processing Options or of a Generate Application Cryptogram command as defined by EMVCo^{®} specifications.

12. The payment instrument according to claim 10, wherein the payment instrument is a physical smart card, a payment ring, a payment bracelet, a payment watch, or a digital card hosted on a phone.

13. A system (90) for performing a financial transaction for an amount, said system comprising a payment instrument (10) and a terminal (20) assigned to a merchant, said terminal being configured to send to the payment instrument a sequence of commands respecting an EMV flow as defined by EMVCo^{®} specifications for conducting said financial transaction,
wherein the payment instrument is a payment instrument according to claim 10,
wherein the system comprises a first entity (30), acting on behalf of an issuer of the payment instrument, and a second entity (40), and
wherein said first entity is configured to use the CBDC payload (12) to send to the second entity a message (31) requesting that the amount be transferred between the first CBDC wallet and the second CBDC wallet (41).

14. The system according to claim 13, wherein the payment instrument (10) is configured to use at least one of the following tags PDOL, CDOL1, CDOL2, DDOL and TDOL as defined by EMVCo^{®} specifications to convey to the terminal (20) both said CBDC parameters originated from said first CBDC wallet (11) and the request to get CBDC transaction data originated from the terminal, and
wherein the terminal is configured to use an optional field of a Get Processing Options or of a Generate Application Cryptogram command as defined by EMVCo^{®} specifications to convey said CBDC transaction data to the payment instrument in response to said request.

15. The system according to claim 13, wherein the second entity is the first entity.
